# EUROPÄISCHE PATENTSCHRIFT

(11) **EP 1 704 076 B1**
(45) Veröffentlichungstag und Bekanntmachung des Hinweises auf die Patenterteilung: **02.05.2007**
(21) Anmeldenummer: 04804779.9
(22) Anmeldetag: 13.12.2004
(51) Int. Cl.: B62B 1/04

(54) **KLEINFAHRZEUG MIT SCHWINGACHSE**
LIGHT VEHICLE COMPRISING A SWING AXLE
PETIT VEHICULE A ESSIEU OSCILLANT

(30) Priorität: 06.01.2004 DE 102004001203
(43) Veröffentlichungstag der Anmeldung: 27.09.2006
(73) Patentinhaber: Thermoplastic Eric Müller GmbH, 64807 Dieburg (DE)
(72) Erfinder: MÜLLER, Erich, 64395 Brensbach (DE); BULLING, Dieter, 74626 Bretzfeld (DE)
(74) Vertreter: Seiffert, Klaus
(86) Internationale Anmeldenummer: PCT/EP2004/053414
(87) Internationale Veröffentlichungsnummer: WO 2005/066007

(56) Entgegenhaltungen:
- DE-A1- 10 158 201
- FR-A- 2 144 021
- GB-A- 633 029
- US-A- 4 744 585

## Beschreibung

Die vorliegende Erfindung betrifft ein Kleinfahrzeug, z.B. einen Golfwagen, mit einem Rahmen bzw. Korpus und mindestens zwei Rädern, die über je einen, gelenkig am Korpus angebrachten Achsschenkel mit dem Korpus verbunden sind, wobei die Achsschenkel in mindestens einer ersten Position, in welcher sie an den Korpus herangeklappt sind, und einer zweiten Position, in der sich die Achsschenkel von dem Korpus weg erstrecken und die als Fahrposition des Kleinfahrzeugs definiert ist, verschwenkbar sind.

Derartige Kleinfahrzeuge sind z.B. als sogenannte "Golfcarts" bzw. Golfwagen aus dem Stand der Technik bekannt. Die Erfindung ist jedoch nicht notwendigerweise auf derartige Golfwagen beschränkt, sondern auch auf andere Kleinfahrzeuge anwendbar, welche an einen Korpus heranklappbare Achsschenkel aufweisen, an deren Enden Laufräder gelagert sind, wobei die Achsschenkel zwischen einer an den Korpus herangeklappten Stauposition und einer ausgeklappten Fahrposition verschwenkbar sind. Typischerweise sind dies Fahrzeuge, die keinen Sitz oder keine Standfläche für den Transport eines Fahrers aufweisen, sondern die über einen Lenker geführt werden, eventuell auch im Selbstfahrbetrieb oder mit Fernsteuerung fahren, während der Fahrzeugführer vor, hinter oder neben dem Fahrzeug herläuft bzw. -geht.
Dabei hat das Heranklappen der Achsschenkel an den Korpus im allgemeinen den Zweck, das Fahrzeug insgesamt auf möglichst geringe Staumaße zusammenzuklappen, damit es leichter verstaut und beispielsweise im Kofferraum eines Pkws transportiert werden kann. Dabei können die Räder dauerhaft an den Enden der Achsschenkel befestigt sein, sie können aber auch abnehmbar sein, um die Verstaubarkeit des Kleinfahrzeugs noch weiter zu verbessern.

Das Bedürfnis, das Fahrzeug auf ein möglichst kleines Staumaß zusammenzuklappen, führt dazu, daß zwischen Korpus und Achsschenkeln vorgesehene Gelenke möglichst nahe beieinander am Korpus liegen und der Korpus seinerseits relativ kompakt und schmal gebaut sein sollten. Bei Bedarf kann auch der Korpus seinerseits zusammenklappbar sein, was allerdings sein Gewicht erhöht und den Wagen insgesamt komplizierter macht. Damit das Fahrzeug in der Fahrposition eine ausreichende Stabilität hat, müssen dementsprechend die Achsschenkel hinreichend lang sein, um beim Auseinanderklappen des Fahrzeugs in die Fahrposition eine ausreichende Spurbreite zu erhalten, die dem Fahrzeug eine gewünschte Fahrstabilität verleiht.

Je nach dem Gewicht, welches der Wagen zu tragen hat und welches auch der Wagen bzw. dessen Korpus selbst aufweist, werden über die Gelenkverbindung zwischen Korpus und Achsschenkeln, die Achsschenkel selbst und die Räder relativ große Gewichtskräfte abgetragen. Dies führt in aller Regel dazu, daß durch das auf den Rädern lastende Gewicht die Achsschenkel je nach Fahrzeugtyp entweder die Tendenz haben, noch weiter aufzuklappen und sich so weit zu spreizen wie das Gelenk es zuläßt, oder aber in Richtung des Rahmens einzuklappen, so daß die Achsen der Räder nicht mehr parallel verlaufen, wie es in der normalen Fahrposition sein sollte, sondern einen mehr oder weniger großen Winkel miteinander einschließen, was die Rollreibung beim Fahren des Kleinfahrzeugs beträchtlich vergrößert.

Um daher ein übermäßiges Aufspreizen oder Einklappen der Achsschenkel bei Belastung des Fahrzeugs in der Fahrposition zu vermeiden, sind bei bekannten Wagen dieser Art zusätzliche Verstrebungen oder Verspannungen zwischen den beiden Achsschenkeln oder auch zwischen Korpus und Achsschenkeln vorgesehen, die nach Erreichen der Fahrposition der Achsschenkel ein weiteres Aufspreizen oder Einklappen der Achsschenkel verhindern. Wegen der relativ großen Hebelwirkung durch die entsprechend langen Achsschenkel würden ansonsten etwaige Anschläge im Gelenkbereich übermäßig stark belastet und müßten entsprechend massiv und schwer ausgebildet werden, was zu einen das erwähnte Aufspreizen dennoch nicht vollständig verhindert und zum anderen sowohl zu den Kosten und zum Gewicht des Fahrzeugs beiträgt als auch die Handhabbarkeit beim Verstauen des Fahrzeugs beeinträchtigt.

Derartige Verstrebungen und Verspannungen haben allerdings den Nachteil, daß sie ihrerseits beim Zusammenklappen und Verstauen des Fahrzeugs störend sein können. Außerdem sind diese Verspannungen oder Verstrebungen, da sie im Gebrauch während der Fahrposition im wesentlichen nur Zugbelastungen ausgesetzt sind, bei einem Fahrzeugtyp entweder als dünne Blech-, Draht- oder Kunststoffstreben, als Seile oder Kunststoffbänder ausgebildet, die anderen Belastungen als den Zugbelastungen, für die sie vorgesehen sind, kaum gewachsen sind. Bei einem anderen Fahrzeugtyp sind entsprechende dünne Stahlbleche oder Rundstäbe Druckbelastungen ausgesetzt. Durch die Verformungen, die derartige Elemente beim Zusammenklappen des Fahrzeugs erfahren, können sie mitunter verdrehen oder verkanten und werden daher beim Zusammenklappen ebenso wie beim Auseinanderklappen des Fahrzeugs oftmals zusätzlichen Querbelastungen, Scherungen oder Biegebelastungen ausgesetzt, was häufig dazu führt, daß entsprechende Elemente bereits nach kurzem Gebrauch brechen oder reißen. Insbesondere Verspannungen aus Seilen oder Kunststoffbändern zerreißen sehr oft bereits nach kurzem Gebrauch des Fahrzeugs. Dies führt wiederum zu einer Überlastung des Gelenkbereichs zwischen Achsschenkeln und Korpus, der für derartige Belastungen nicht ausgelegt ist, und kann schnell dazu führen, daß das gesamte Fahrzeug unbrauchbar wird. Andere Verstrebungen, wie z.B. gelenkig verbundene Profilblechstreifen oder Schienen, können beim Zusammenklappen zu Verletzungen und zum Einklemmen der Finger eines Benutzers führen und sind im übrigen sehr empfindlich gegen Querbelastungen. Solch ein Kleinfahrzeug ist aus Dokument FR 2 144 021 bekannt, das die Merkmale des Oberbegriffs des Anspruchs 1 beinhaltet.

Demgegenüber liegt der vorliegenden Erfindung die Aufgabe zugrunde, ein Kleinfahrzeug mit den eingangs genannten Merkmalen zu schaffen, welches auch bei häufigem Gebrauch die sichere Einstellung einer Fahrposition der Achsschenkel garantiert und mit erhöhtem Fahrkomfort und einer leichteren Handhabung verbindet.

Diese Aufgabe wird dadurch gelöst, daß mindestens eine Feder vorgesehen ist, einerseits am Korpus und andrerseits über den Gelenkbereich an den Achsschenkeln angreift und die Fahrposition der Achsschenkel ohne zusätzliche Querverstrebungen und Verspannungen nur durch ihre Federkraft hält.

Während also nach dem herkömmlichen Stand der Technik die Achsschenkel oder ein Achsschenkel und der Korpus mit dem Gelenkbereich und einer zusätzlich quer zwischen den Achsschenkeln oder zwischen den Achsschenkeln und dem Korpus verlaufenden Verspannung oder Verstrebung ein Stabilisierungsdreieck aufspannten, bleibt es gemäß der vorliegenden Erfindung im wesentlichen bei der Gelenkverbindung zwischen den Achsschenkeln und dem Korpus, wobei allerdings eine zusätzliche Feder vorgesehen ist, die über den Gelenkbereich die Fahrposition der Achsschenkel hält.

Zum Korpus als dem einen Angriffspunkt der Feder zählen im Sinne der vorliegenden Erfindung gegebenenfalls auch Zusatzbauteile , die starr am Korpus befestigt sind oder, falls sie relativ zum Korpus beweglich angebracht sind, jedenfalls beim Aufklappen der Achsschenkel in die Fahrposition nicht dieselbe Relativbewegung zum Korpus vollführen wie mindestens einer der beiden Achsschenkel und welche auch nicht nennenswert in den vom übrigen Korpus und den Achsschenkeln in der Fahrposition aufgespannten Freiraum hineinragen.

Damit entfallen jegliche Verstrebungen oder Verspannungen, die ansonsten in dem freien Raum zwischen den Achsschenkeln oder zwischen Achsschenkeln und Korpus angeordnet wären. Grundsätzlich könnte die Feder dennoch direkt zwischen den beiden Achsschenkeln wirken, d.h. mit einem Ende an dem einen Achsschenkel angreifen und mit dem anderen Ende, gegebenenfalls über eine Seilzugführung, an dem anderen Achsschenkel angreifen, wobei aber die Feder oder der Seilzug über den Gelenkbereich zu führen wären. Bevorzugt ist jedoch eine Ausführungsform der Erfindung, bei welcher die Feder mit einem Ende an dem Korpus angreift und mit dem anderen Ende an dem Achsschenkel angreift, auch hier jedoch wiederum beschränkt auf den Gelenkbereich und ohne störende Verstrebungen oder Verspannungen, die durch den freien Raum zwischen den aufgeklappten Achsschenkeln und dem Korpus führen würden.

Selbstverständlich versteht es sich, daß die Feder dennoch über einen, wenn auch kurzen, Hebel am Achsschenkel bzw. Korpus angreifen muß, wobei der effektive Hebel definiert ist durch den senkrechten Abstand der tatsächlichen oder umgelenkten Federangriffspunkte zu der Schwenkachse am Gelenk zwischen Achsschenkel und Korpus.

Zum Beispiel kann zu diesem Zweck der Achsschenkel, gesehen vom Laufradende aus, eine über die Schwenkachse des Gelenks hinausgehende Verlängerung aufweisen, an welcher eine im Korpus untergebrachte Feder angreift. Alternativ kann gemäß einer bevorzugten Ausführungsform der Erfindung ein Umlenkblock für einen mit einem Ende der Feder verbundenen Seilzug im Abstand zu der Gelenkachse vorgesehen sein, so daß ein effektiver Hebel durch den kürzesten senkrechten Abstand des Seilzugs zur Gelenkachse gegeben wäre.

Mit Vorteil weisen entweder der Korpus oder auch einer oder beide Achsschenkel einen Hohlraum zur Aufnahme der Feder auf, wobei die Feder am besten in einem rohrförmigen Abschnitt des Korpus untergebracht wird und mit einem Ende oder einem Federgehäuse in dem Korpusrohr befestigt wird, während das andere, relativ bewegliche Ende, an dem über die Schwenkachse hinausgehenden Hebelabschnitt des Achsschenkels angreift. Ebensogut kann der Angriffspunkt der Feder jedoch auch im Inneren des Achsschenkels liegen und beispielsweise über einen im Gelenkbereich angeordneten Umlenkblock über einen Seilzug mit dem einen Federende verbunden sein.

Der Begriff "Feder", wie er im Rahmen der vorliegenden Erfindung und insbesondere in Anspruch 1 und einigen weiteren Unteransprüchen verwendet wird, ist sehr weit zu interpretieren und umfaßt sowohl mechanische Federn, insbesondere stark vorgespannte Schraubenfedern, als auch Gasdruckfedern, wobei Gasdruckfedern im allgemeinen auch hydraulische Komponenten aufweisen und gegebenenfalls auch verriegelbar sind, so daß der gasgefüllte Raum der Feder mit seiner Federwirkung im verriegelten Zustand der Feder nicht mehr zum Tragen kommt, sondern ein Bewegen der Federn nur noch durch Kompression eines hydraulischen Fluids bzw. Öls erzielt wird. Da aber derartige Fluide im wesentlichen nicht komprimierbar sind, ist ein solches Federelement in der verriegelten Position im wesentlichen starr, d.h. seine beiden Enden sind relativ zueinander kaum noch bewegbar und starr über das Hydraulikfluid gekoppelt. Gleichwohl verbleibt durch die Konstruktion der vorliegenden Erfindung auch in einer solchen Position noch eine gewisse Federwirkung durch die Umlenkung der Federkräfte vom Rahmen auf die Achsschenkel bzw. von einem auf den anderen Achsschenkel, so daß in diesem Sinne die angesprochene Federwirkung erhalten bleibt und der Begriff "Feder" gerechtfertigt ist. Gemeinsam ist aber allen Ausführungsformen der Erfindung, daß es zumindest eine Einstellmöglichkeit für die Feder in der Weise gibt, daß sie durch Kompression oder Ausdehnung Endstellungen definiert, die den Endstellungen der Achsschenkel, nämlich der eingeklappten Position bzw. der ausgeklappten Position, entsprechen.

Besonders bevorzugt ist eine Ausführungsform der Erfindung, bei welcher die Feder eine Gasdruckfeder ist, welche mindestens sowohl in der an den Korpus herangeklappten Position der Achsschenkel als auch in der Fahrposition der Achsschenkel arretierbar bzw. verriegelbar ist. Manche Typen von Gasdruckfedern weisen im allgemeinen zwei durch einen Strömungswiderstand getrennte, mit Hydraulikfluid, Öl oder einer anderen nicht komprimierbaren Flüssigkeit gefüllte Kammern auf, von denen mindestens eine direkt oder indirekt über einen Kolben mit Gasdruck beaufschlagt wird. Durch den Gasdruck wird das Fluid (Hydrauliköl) von einer Kammer durch den Strömungswiderstand hindurch in die andere Kammer und bei Aufbringen einer den Gasdruck überwindenden Kraft in Gegenrichtung zurück gedrückt. Wenn der Strömungswiderstand wahlweise ein zu öffnendes oder zu schließendes Ventil ist, ist eine solche Gasdruckfeder bzw. ein solches Hydraulikelement in verschiedenen Positionen verriegelbar. Auf diese Weise läßt sich der Gleichgewichtspunkt der "Feder" beliebig einstellen und man erhält eine Rückstellkraft in Richtung des Gleichgewichtspunkts bei einer Auslenkung aus der dadurch definierten Position in beliebiger Richtung, wobei diese Rückstellkraft aber im wesentlichen durch die verbleibende Elastizität der übrigen Komponenten der Feder und ihrer Verbindung mit dem Rahmen bzw. mit den Achsschenkeln bereitgestellt wird, da die Federposition abgesehen von der geringen Komprimierbarkeit der Hydraulikflüssigkeit und einem entsprechenden Nachgeben der diese Flüssigkeit aufnehmenden Volumina nach dem Verriegeln eine feste Position aufweist.

Man könnte jedoch auch ähnliche Federn verwenden, wie sie z.B. in Drehstühlen oder dergleichen benutzt werden, die ebenfalls unterschiedlich einstellbare Nullpunkts- bzw. Endeinstellungen haben, die jedoch auch in diesem Zustand noch eine Federwirkung aufgrund eines nachgebenden Gasvolumens haben.

Die Verwendung aller vorgenannten Typen von Gasdruckfedern bedeutet weiterhin, daß auch in der Fahrposition zumindest gewisse kleine Auslenkungen der Achsschenkel um eine Gleichgewichtsposition in beiden Richtungen noch möglich sind, auch wenn eine verriegelte Gasdruckfeder derartigen Auslenkungen einen starken Widerstand entgegensetzt und eine entsprechend hohe Rückstellkraft bereitstellt. Diese federnde Nachgiebigkeit erhöht jedoch den Fahrkomfort beim Bewegen des Fahrzeugs, führt zum leichteren Ausgleich von Unebenheiten nach Art eines Stoßdämpfers und vermindert außerdem die auf den Gelenkbereich im Falle von Stoßbelastungen wirkenden Kräfte.

Dabei ist es zumindest bei Fahrzeugen, die erheblich unterschiedliche Lasten zu tragen haben, besonders zweckmäßig, wenn die Feder durch Schließen eines Ventils in beliebigen Positionen arretierbar ist. Dies ermöglicht es beispielsweise, für ein mit mehr Gewicht belastetes Kleinfahrzeug eine andere Fahrposition zu arretieren als für ein weniger belastetes Fahrzeug. Der durch die Nachgiebigkeit der Gasdruckfeder zusätzlich bereitgestellte Federweg sorgt dann dafür, daß die tatsächliche Fahrposition bei dem stärker belasteten Fahrzeug im wesentlichen die gleiche ist wie bei einem weniger belasteten Fahrzeug und auf diese Weise eine optimale parallele oder kollineare Ausrichtung der Achsen der beiden Räder erzielt werden kann, so daß die Rollreibung der Räder auf dem Untergrund als auch der Randlager minimal ist. Bei einem von Hand gezogenen Fahrzeug würde dies einen spürbar geringeren Kraftaufwand für das Ziehen oder Schieben des Fahrzeugs und bei einem motorbetriebenen Fahrzeug äußert sich dies in einem geringeren Energieverbrauch, was insbesondere bei akkubetriebenen Elektroantrieben von großem Vorteil ist, weil dann der Elektroantrieb ebenso wie der zum Gewicht spürbar beitragende Akku entsprechend kleiner ausgelegt werden können.

Unabhängig von der Arretierung der Fahrposition durch Einstellen der Feder kann zusätzlich im Gelenkbereich auch noch ein mechanischer Endanschlag vorgesehen sein, der vorzugsweise jenseits der normalen Fahrposition vorgesehen ist oder zumindest eine maximal zulässige Fahrposition definiert.

Bevorzugt ist eine Ausführungsform der Erfindung, bei welcher eine einzige Feder am Korpus angeordnet und mit einem Ende fest mit diesem verbunden ist, deren anderes Ende mit beiden Achsschenkeln in Verbindung steht.

In der bevorzugten Ausführungsform der Erfindung besteht der Korpus aus mindestens zwei im wesentlichen parallelen und starr miteinander verbundenen Rohren, die in ihrem unteren Bereich über einen Gelenkabschnitt mit je einem Achsschenkel, der vorzugsweise ebenfalls rohrförmig ausgebildet ist, verbunden sind.

Außerdem ist in der bevorzugten Ausführungsform der Erfindung vorgesehen, daß der Korpus ein drittes Rohr aufweist, in dem ein weiteres, als Lenkstange dienendes Rohr teleskopierbar aufgenommen und vorzugsweise in verschiedenen Positionen arretierbar ist und welches außerdem einen vorzugsweise abnehmbaren Steuergriff trägt. Der Steuergriff kann mit entsprechenden Bedienelementen beispielsweise für einen Elektroantrieb des Fahrzeugs ausgerüstet sein.

Der Griff ist vorzugsweise ein Bügel mit einem runden, vorzugsweise kreisförmigen Querschnitt. Auch der Bügel kann als Ganzes kreisförmig, oval oder im wesentlichen rechteckig mit stark gerundeten Eckbereichen ausgebildet sein. Der Bügel kann, muß aber nicht, als geschlossener Ring ausgebildet sein. Alternativ könnte der Bügel auch die Form eines Halbkreises oder eines sonstigen Abschnitts eines geschlossenen Bügels haben. Dieser bügelförmige Griff wird vorzugsweise mit Hilfe einer Schellkupplung mit der Lenkstange verbunden. Insbesondere sollte die Schnellkupplung mindestens zwei um 180° (bezogen auf die Längsachse der Lenkstange) versetzte Befestigungspositionen an der Lenkstange haben. Dies ermöglicht es beispielsweise, den in der Schelle bzw. einer entsprechenden Schnellkupplung gehaltenen Bügel nach dem Lösen der Schelle einfach um 180° zu drehen und erneut mit der Schelle zu befestigen. Dies ist insbesondere dann zweckmäßig, wenn an dem Bügel entweder Griffelemente oder aber Bedienungselemente asymmetrisch vorgesehen sind, so daß sie in einer gegebenen Stellung nicht gleichermaßen gut von Links- und von Rechtshändern bedient werden könnten. Durch das Drehen um 180° erreicht man eine spiegelbildliche Anordnung dieser Bedienelemente, die dann nach dem Wechsel der Einbaurichtung für einen konkreten Benutzer passend eingestellt sind. Alternativ könnte auch die Lenkstange um ihre Längsachse drehbar sein, was aber die Gestaltung der Lenkstange stärker einschränkt.

Weiterhin ist es zweckmäßig, wenn der Bügel im Bereich der Schnellkupplung einen kurzreichweitigen Sender, z.B. eine einfache Sendespule, aufweist, während der Schnellkupplungsteil, der am Ende der Lenkstange vorgesehen ist, oder aber die Lenkstange selbst eine entsprechende Empfängerspule aufweist. Auf diese Weise ist es möglich, über die Kopplung der beiden Spulen Signale an eine Motorsteuerung zu senden, wenn die Räder des Kleinfahrzeugs mit Motorhilfe angetrieben werden. Man vermeidet auf diese Weise Kabel- und Steckverbindungen zwischen dem Handgriff, der sämtliche Steuerungselemente enthält, und der Lenkstange bzw. dem Korpus des Wagens. Es versteht sich, daß die vorstehend beschriebenen Merkmale des Handgriffs auch unabhängig von der konkreten Achsschenkelhalterung realisiert werden können, ebenso wie auch die sonstigen Merkmale des Korpus, der aus zwei beabstandeten, parallelen Rohren und einem dazwischen angeordneten, dritten Rohr besteht, welches als Teleskoprohr für eine ausziehbare Lenkstange dient, von der federnden Aufhängung der Achsschenkel und der Ausgestaltung des Handgriffs prinzipiell unabhängig ist.

Die vorzugsweise einzige Feder ist zweckmäßigerweise zentral, das heißt bei dem vorstehenden Beispiel zwischen den beiden starr verbundenen Korpusrohren im Inneren des dritten, z. B. als Teleskoprohr für die Lenkstange dienenden Rohres, in der Nähe der Achsschenkelgelenke angeordnet.

Während die die Achsschenkel in der Fahrposition haltende Feder vorzugsweise die einzige diesem Zweck dienende Feder ist, können allerdings zusätzliche Federn vorgesehen werden, welche in der entgegengesetzten Richtung wirken und welche in dem Fall, daß die zentrale, die Achsschenkel in Fahrposition haltende Feder wirkungslos gemacht wird, die Achsschenkel in einer am Korpus anliegenden Position halten.

Die Räder sind vorzugsweise über eine Schnellkupplung mit den Achsschenkeln verbunden und auf diese Weise leicht abnehmbar. Vorzugsweise lassen sich auch alle anderen Anbauten in eine eng am Korpus anliegende Stauposition bringen.

In der bevorzugten Ausführungsform weist jedes der Räder einen eigenen Motor und eine eigene Motorelektronik auf. Auch entsprechende Akkumulatoren sind vorzugsweise in demselben Gehäuse angeordnet wie der Motor und sitzen vorzugsweise auf der Nabe der Räder. Bei den Motoren handelt es sich vorzugsweise um Servomotoren oder Schrittmotoren mit einem Encoder mit einer entsprechenden Elektronik, welche die pro Zeiteinheit gemessenen Encoderimpulse beispielsweise mit entsprechend angegebenen Sollwerten vergleicht.

Die Steuerung ist vorzugsweise eine digitale Steuerung und die Steuerimpulse gehen aus vom Griff, werden von dort über den kurzreichweitigen Sender in eine Empfangsspule im Lenkerrohr eingekoppelt und werden von dort über Kabel durch den Rahmen und die Achsschenkel zu den Rädern bzw. den Radkupplungen geführt. Dabei sind zweckmäßigerweise (anlog zu Handgriff und Lenkstange) in die Schnellkupplung der Räder entweder auch entsprechende elektrische Kontakte oder aber wiederum eine kontaktlose Sendeeinheit kurzer Reichweite integriert, so daß die Motoren entsprechende Steuersignale erhalten. Dabei ist jedes einzelne der Räder mit einem individuellen Motor und einer individuellen Motorsteuerung und ebenso auch mit einer eigenen Energieversorgung in Form eines Akkumulators ausgestattet.

Die entsprechenden Motoreinheiten mit integrierter Steuerung und Stromversorgung, wobei die Stromversorgungsakkus vorzugsweise abnehmbar in die Motoreinheit integriert sind, lassen sich selbstverständlich auch an einem Kleinfahrzeug verwirklichen, bei welchem die Achsschenkel nicht allein durch Federkraft in der Fahrposition gehalten werden.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: ein erfindungsgemäßes Kleinfahrzeug in Form eines Golfwagens im gebrauchsfertigen Zustand,
- Figur 2: den Golfwagen nach Figur 1 mit abgenommenen Rädern und einem eingeschobenen Verlängerungsrohr,
- Figur 3: den Golfwagen nach Figur 1 und 2, jedoch mit abgenommenen Rädern und eingeklappten Achsschenkeln,
- Figur 4: eine rückwärtige Ansicht des Golfwagens mit eingeklappten Achsschenkeln,
- Figur 5: eine Vorderansicht des Wagens mit eingeklappten Achsschenkeln und abgenommenen Rädern, wobei der Korpus weitgehend fortgelassen wurde,
- Figur 6: den Gelenkbereich mit Gasdruckfeder und einem Achsschenkel im montierten Zustand, wobei jedoch der Korpus fortgelassen wurde,
- Figur 7: den Gelenkabschnitt mit einer Feder und einem Achsschenkel in einer Explosionsdarstellung,
- Figur 8: Eine perspektivische Querschnittansicht durch den Korpus entsprechend der Schnittlinie VIII - VIII in Figur 4 und
- Figur 9: Eine perspektivische Querschnittansicht durch den Korpus entsprechend der Schnittlinie IX - IX in Figur 4.

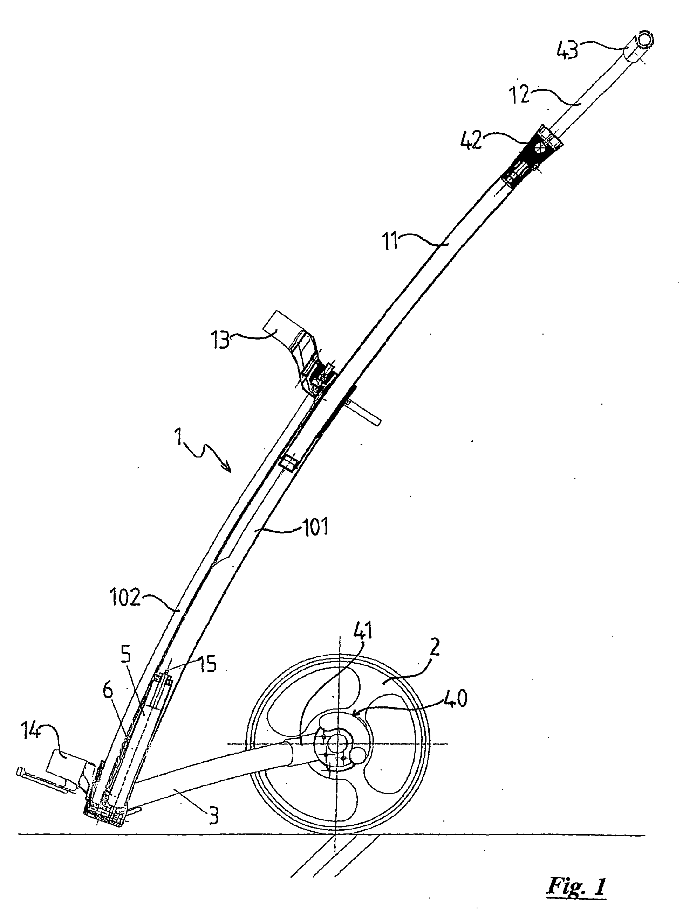

Man erkennt in Figur 1 einen Korpus 1 mit daran angelenkten Achsschenkeln 3, 4 und an den Enden der Achsschenkel gehaltenen Laufrädern, wobei in der Seitenansicht gemäß Figur 1 nur eines der Laufräder sichtbar ist.

Der Korpus besteht aus zwei im Abstand voneinander verlaufenden, leicht gekrümmten äußeren Rohren 102, 103 und einem etwas versetzt dazwischen liegenden dritten, zentralen Rohr 101, wobei alle drei Rohre 101, 102, 103 starr und vorzugsweise einstückig miteinander verbundenen sind und insbesondere aus einem faserverstärkten, thermoplastischen Material hergestellt sind. Alle drei Rohre haben zumindest in ihrem oberen Bereich einen elliptischen Querschnitt wobei der Querschnitt des zentralen dritten Rohres so gewählt ist, das ein viertes Rohr, welches im folgenden als Lenkstange oder Lenker 11 bezeichnet wird und welches in Figur 1 in einem nach oben ausgezogenen Zustand dargestellt ist, genau das zentrale dritte Rohr 101 hineinpaßt wobei alle drei Hauptrohre des Korpus 1 und die Lenkstange 11 leicht gekrümmt verlaufen und somit die Lenkstange 11 in nur einer eindeutigen Orientierung in das zentrale dritte Rohr 101 hineinpaßt und in diesem teleskopartig geführt ist.

Alle Korpusteile und auch die Lenkstange 11, die Achsschenkel 3, 4 sowie vorzugsweise auch mindestens Teile des Handgriffs 12 sind bei dem erfindungsgemäßen Golfcart aus einem faserverstärkten thermoplastischen Kunststoff hergestellt.

Am oberen Ende des Lenkers 11 befindet sich der abnehmbare Griff 12 in Form eines Rings, der z. B. über Steckkontakte mit elektrischen Anschlüssen verbunden sein kann, die am oberen Ende des Rohrs 11 an einer entsprechenden Halterung vorgesehen sind. Der Korpus trägt außerdem noch eine obere Golftaschenhalterung 13 und eine untere Golftaschenhalterung 14, die vorzugsweise leicht durch eine Schnellkupplung oder durch Aufstecken auf ein Hakenteil oder dergleichen leicht abnehmbar sind und die hier im Übrigen nicht näher beschrieben zu werden brauchen.

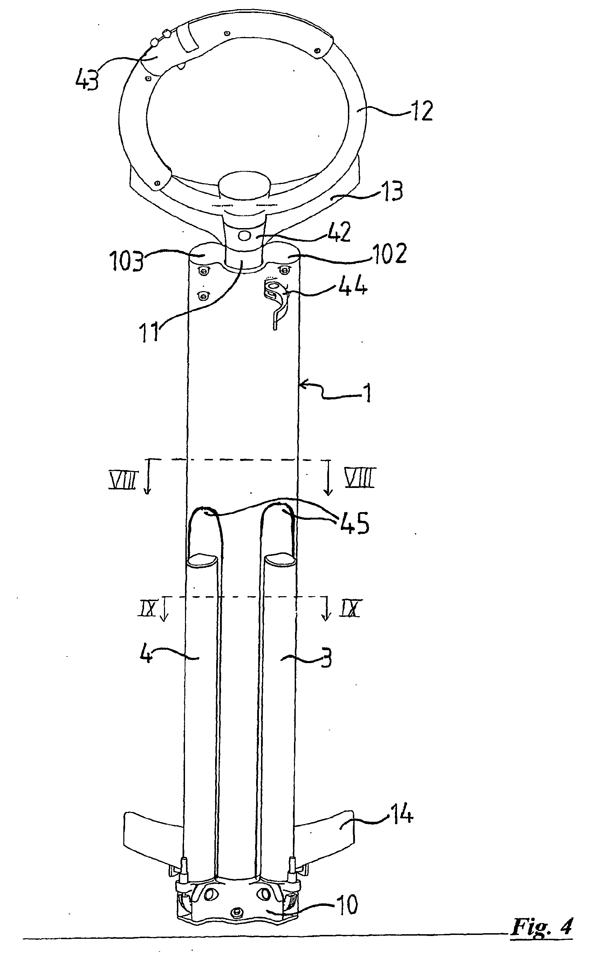

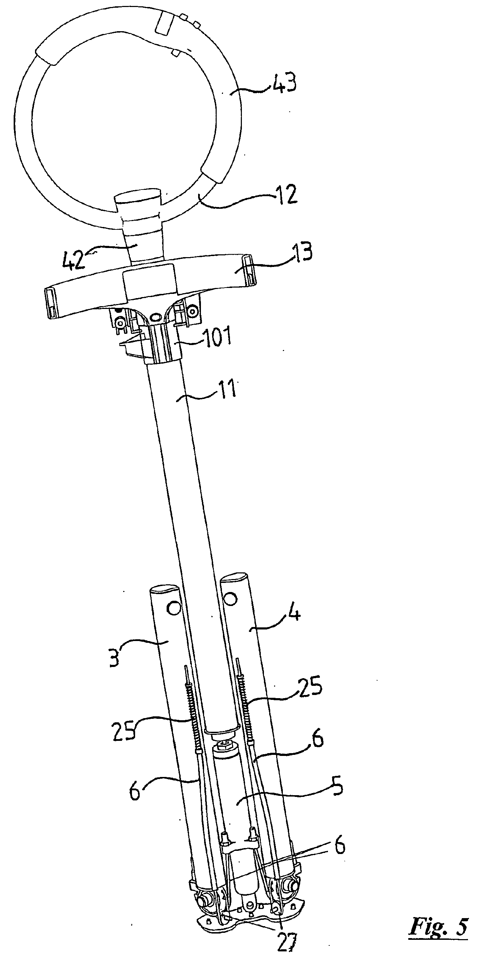

Falls gewünscht, kann der im Wesentlichen in Form eines Kreisringes ausgebildete Griff 12 abnehmbar sein. Wie bereits erwähnt, ist der Griff 12 in der bevorzugten Variante der Erfindung über eine Schnellkupplung mit dem Lenker 11 verbunden , die eine mindestens zweizählige Symmetrieachse aufweist, was es ermöglicht, den Handgriff 12 in schneller und einfacher Weise um 180° zu drehen, um den Handgriff von Rechtshänderbedienung auf Linkshänderbedienung umzustellen. Wie man insbesondere anhand der Figuren 4 und 5 erkennt, ist der Handgriff 12 insbesondere bezüglich seiner Bedienelemente, die innerhalb des verdickten Bereichs 43 des Handgriffs 12 liegen, nicht symmetrisch aufgebaut. Die Figuren 4 und 5 zeigen den Golfwagen in einem zusammengeklappten Zustand ohne Räder von gegenüberliegenden Seiten, was auch die unterschiedlichen Orientierungen des Handgriffs 12 verdeutlicht. Durch Lösen des Handgriffs 12 von der Lenkerstange 11, Drehen um 180° und erneutes Befestigen des Handgriffs 12 an der Lenkerstange 11, wird die Orientierung des Handgriffs 12 zwischen den Figuren 4 und 5 ausgetauscht, so daß man in Figur 4 die Position des Handgriffs hätte, wie sie in Figur 5 dargestellt ist, und umgekehrt. Dies entspricht der Umstellung des Handgriffs von rechtshändiger auf linkshändige Bedienung bzw. umgekehrt.

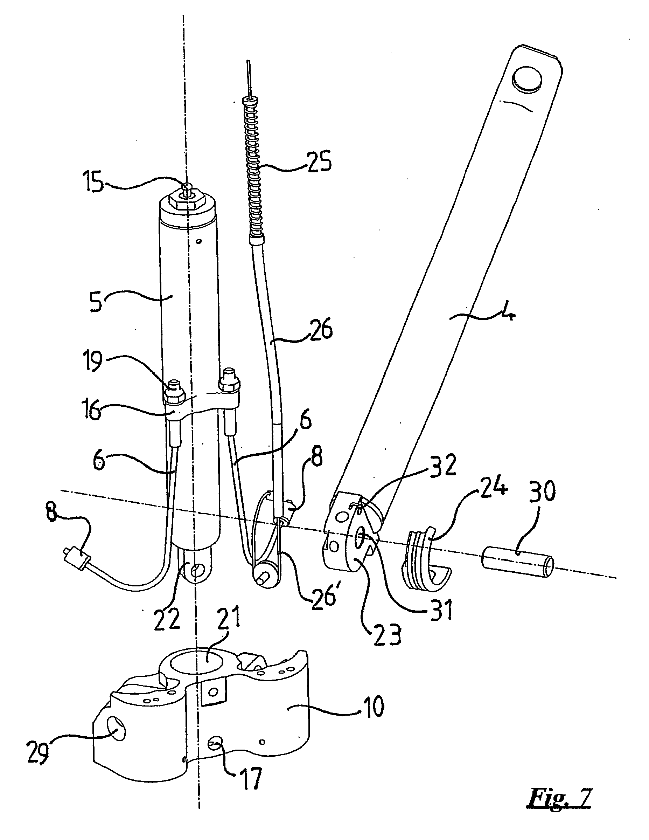

Man erkennt außerdem in der Längsschnittansicht durch den zentralen Rohrabschnitt 101 im unteren Bereich des Rohres 101 eine Gasdruckfeder 5. Diese Gasdruckfeder 5 ist indirekt mit dem Rohr 101 bzw. dem gesamten Korpus 1 verbunden, indem ihr unterer Abschnitt 5b (siehe Figur 7) an einem Gelenkblock 10 befestigt ist, an dem wiederum der Korpus 1 fixiert ist. Der obere Federabschnitt 5a, der relative zu dem unteren Abschnitt 5b beweglich ist, weist eine Halterung 16 für jeweils ein Ende zweier Seilzüge 6 auf, von denen je einer über einen Block oder eine Seilscheibe an der Schwenkachse vorbei zu je einem der Achsschenkel 3, 4 führt und mit diesem verbunden ist.

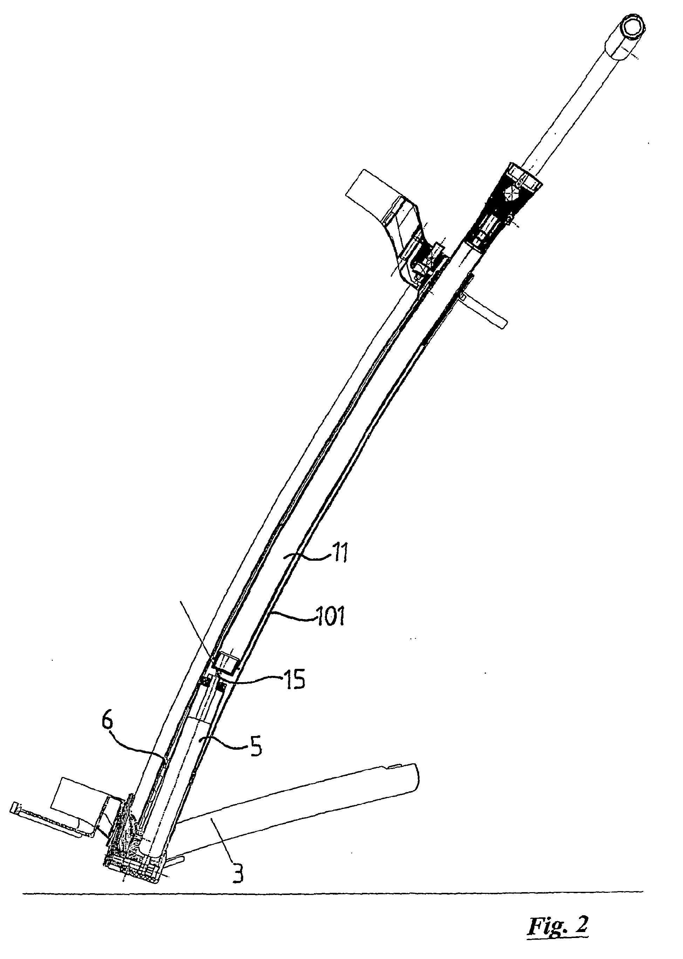

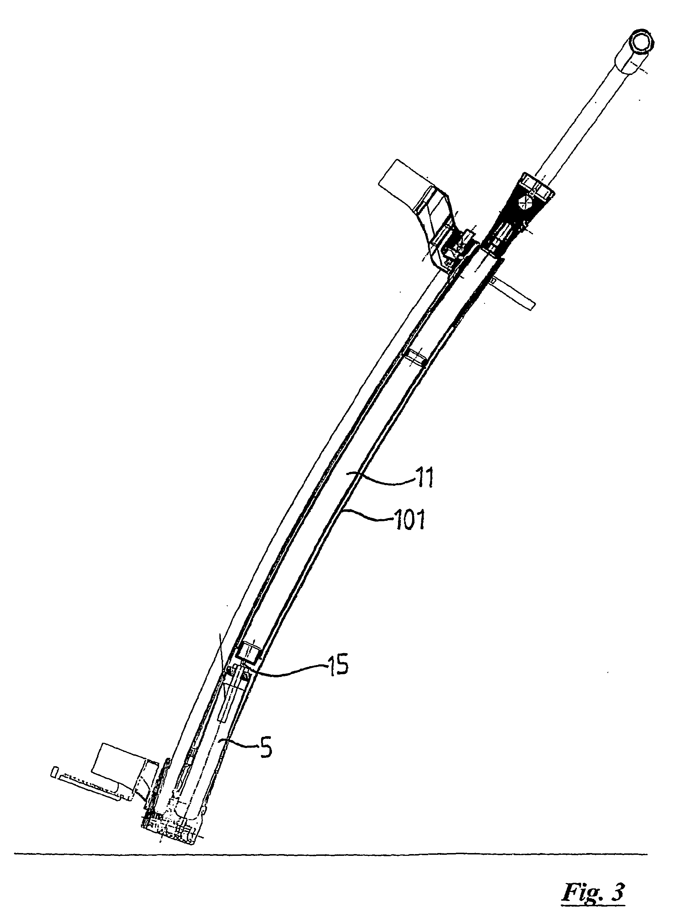

Die Feder 5 ist eine einstellbare Gasdruckfeder mit einem verschließbaren Ventil, so daß sowohl die in Figur 1 und 2 dargestellte Fahrposition als auch die eingeklappte Position entsprechend den Figuren 3 bis 5 an der Feder einstellbar sind, wie es später noch erläutert wird. Der Gelenkbereich ist in den Figuren 1 bis 5 nicht näher dargestellt, jedoch sind die Gelenkachsen 29/30 unter einem Winkel zueinander (z. B. etwa 90°) derart angeordnet, daß beim Herunterklappen der Achsschenkel 3, 4 in die Fahrposition die Achsschenkel nicht nur von dem Korpus 1 weg in Richtung des Bodens klappen, sondern auch relativ zueinander auseinanderschwenken, so daß sie, je nachdem wie weit sie von dem Korpus fort verschwenkt werden, die Schenkel eines spitzwinkligen bis nahezu in etwa rechtwinkligen Dreiecks aufspannen. Die an den freien Enden der Achsschenkel 3, 4 angeordneten Laufräder 2 haben dann eine ausreichende Spurbreite, um dem Wagen eine entsprechende Fahrstabilität zu geben. Der Wagen kann insbesondere auch in der in Figur 1 dargestellten Position losgelassen werden und auf seinen beiden Rädern und dem unteren Endabschnitt des Gelenkbereichs auf dem Boden aufstehen. Dadurch, daß die Achsschenkel nur über die Spannung der Gasdruckfeder und die Seilzüge 6 in Ihrer Fahrposition gehalten werden, wirken sie als Schwingen, die eine gedämpfte Federbewegung der Räder relativ zum Korpus erlauben und damit für verbesserten Fahrkomfort, d. h. eine ruhigere und gleichmäßigere Fahrweise des Wagens sorgen, wodurch die Last (Golfbag) weniger stark geschüttelt wird, damit weniger Geräusche (Schlägerklappern) entstehen und der Energieverbrauch für den Antrieb gesenkt wird.

Die Räder sind, wie bereits erwähnt, über eine Schnellkupplung 41 abnehmbar, und könnten beispielsweise über ein an den Radachsen angebrachtes Rohrstück auf das Ende der rohrförmigen Achsschenkel aufgesteckt werden, wobei entsprechende Halterungs- und Führungselemente vorgesehen sind, die eine eindeutige Orientierung der Radachsen relativ zu den Achsschenkeln festlegen.

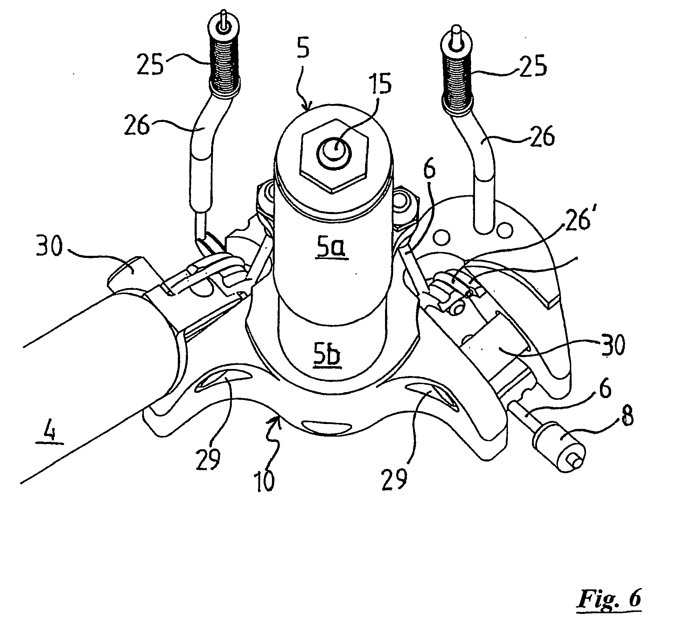

Anhand der Figuren 6 und 7 ist das Funktionsprinzip des erfindungsgemäßen Golfwagens am besten zu erkennen. Man erkennt in Figur 6 eine Gasdruckfeder 5, die aus einem oberen Zylinder 5a und einem unteren Kolben 5b besteht. Der Gasdruck in der Feder hat die Tendenz, den Kolben 5b und den Zylinder 5a auseinanderzudrücken, wobei an dem Zylinder 5a zwei Seilhalter 16 (besser zu erkennen in Figur 7) vorgesehen sind, an welchen je ein Ende von zwei Zugseilen 6 fixiert ist, deren anderes Ende 8 mit je einem Achsschenkel 3, 4 zu verbinden ist. Die am Seilhalter 16 fixierten Seilenden sind mit einer Gewindehülse oder -stange versehen, die durch eine Bohrung des Seilhalters hindurchgeführt und auf der anderen Seite durch eine selbstsichernde Mutter 19 in einstellbaren Positionen fixierbar ist. Das untere Ende des Kolbens 5b wird mit seinem Verbindungsabschnitt 22 in die zentrale Bohrung 21 eines Gelenkblocks 10 eingeführt und darin fixiert, beispielsweise durch einen Bolzen, der durch eine Bohrung in dem quer verlaufenden Verbindungsabschnitt 22 an dem unteren Ende des Kolbens 5b und die Bohrung 17 im Gelenkblock 10 hindurchgeführt wird (nicht dargestellt). An dem Gelenkblock 10 ist selbstverständlich auch der Korpus 1 bzw. die beiden äußeren Rohre 102, 103 des Korpus mit dem dazwischenliegenden dritten Rohr 101 befestigt, wobei das dritte Rohr 101 die Gasdruckfeder 5 zusammen mit den Seilhaltern 16 und den Seilzügen 6 umschließt. Der Achsschenkel 4 weist an seinem in Figur 6 vorderen Ende einen Gelenkansatz 23 mit einer zentralen Bohrung 31 auf, der ein im wesentlichen halbkreisförmiges Profil hat und einige Aussparungen 32 zur Verbindung mit dem Seilende 28 eines Bowdenzuges 26 sowie auch mit dem Seilende 8 aufweist (letzteres in den Figuren nicht sichtbar). Auf das halbkreisförmige Ende des Gelenkansatzes 23 ist eine halbschalenförmige Seilscheibe 24 aufgesteckt, die effektiv als Umlenkrolle für einen der Seilzüge 6 und für das Seil 26' des Bowdenzuges 26 wirkt. Ein Bolzen 30 verbindet den Achsschenkel 4 bzw. dessen Ansatz 23 mit dem Lagerblock oder Gelenkblock 10, indem er durch Bohrungen 29, von denen an dem Gelenkblock 10 eine sichtbar ist, und durch die zentrale Bohrung 31 des Ansatzes 23 hindurchgeführt wird und so eine Gelenkverbindung zwischen dem Achsschenkel 4 und dem Korpus 1 des Golfwagens bildet, da der Gelenkblock 10 fest mit dem Korpus bzw. den Rohren des Korpus 1 verbunden ist.

Der Seilzug 26, des Bowdenzuges 26 ist durch eine Feder 25 vorgespannt und das freie Ende 28 des Seilzuges 26' wird mit einer passenden Aussparung 32 in dem Ansatz 23 des Achsschenkels 3 in Eingriff gebracht und wird dann in einer Nut der Seilscheibe 24 und über eine Umlenkrolle 27 geführt. Dabei erfolgt die Führung des Seilzuges 26' über die Seilscheibe in einer Richtung, die effektiv ein Heranziehen des Achsschenkels 3 in die eingeklappte Stellung bewirkt, wenn die Feder 25 an dem Bowdenzug 26 auf Druck vorgespannt ist. Diese Feder 25 zieht also gerade in der entgegengesetzten Richtung an dem Achsschenkel 4 wie die Gasdruckfeder 5, deren Seilzug 6 genau in entgegengesetzter Richtung um die Seilscheibe 24 herum gelegt und auf der in Figur 6 nicht erkennbaren Seite mit einer weiteren Aussparung des Ansatzes 23 in Eingriff gebracht wird, wobei der den Zylinder 5a von dem Gelenkblock 10 wegdrückende Gasdruck in der Gasdruckfeder 5 über die Seilzüge 6 die Achsschenkel 3,4 in eine aufgeklappte Stellung zieht.

Die Gasdruckfeder weist darüber hinaus eine Ventilbetätigung 15 auf. Die Betätigung dieses Ventils 15 ermöglicht eine relative Verschiebung von Gas in den inneren Volumina der Gasdruckfeder in der Weise, daß Kolben 5b und Zylinder 5a relativ zueinander stärker verschoben werden können, ohne daß sich die Rückstellkraft der Feder vergrößert bzw. die Relatiwerschiebung verhindert. Es versteht sich, daß die Kraft der Gasdruckfeder 5 wesentlich größer ist als die von den Schraubenfedern 25 ausgeübten Kräfte, die in Gegenrichtung wirken und die lediglich den Zweck haben, daß dann, wenn beispielsweise aufgrund der Betätigung des Ventils 15 und bei einem Hochschwenken eines der Achsschenkel 3, um die Gasdruckfeder 5 in die in Figur 3 erkennbare, eingezogenen Stellung zu bringen, die Kraft der Feder 25 auf jeden Fall ausreicht, um auch den zweiten Achsschenkel 3 in die eingeklappte Stellung mit hochzuschwenken.

Die Montage der beiden Seilzüge 6 bzw. 26 in entgegengesetzter Richtung erkennt man besonders deutlich in Figur 7. Figur 7 zeigt den Gelenkbereich in einem teilweise zusammengebauten Zustand, wobei der Achsschenkel 3 auf einer Seite fortgelassen ist und auf der anderen Seite der Achsschenkel 4 montiert dargestellt ist. Das Gelenk zwischen Achsschenkel 4 und Rahmen bzw. Korpus 1 wird gebildet durch den Bolzen 30, der gleichzeitig die zentrale Bohrung des Achsschenkelansatzes 23 und die miteinander fluchtenden Bohrungen 29 auf beiden Seiten des entsprechenden Aufnahmespalts des Gelenkblocks 10 durchgreift. In dem rechten Aufnahmespalt erkennt man zusätzlich noch die hier ohne den Ansatz 23 des Achsschenkels 3 dargestellte Seilscheibe 24.

In den Figuren 1 bis 3 erkennt man außerdem eine besondere Art der Ventilbetätigung mit Hilfe des Lenkerrohres 11. Das Lenkerrohr 11 ist teleskopierbar in demselben mittleren Rohr 101 des Korpus 1 aufgenommen, in dessen unterem Ende sich auch die Gasdruckfeder 5 befindet. Auf der Stirnseite des Gasdruckzylinders 5a ist die Ventilbetätigung 15 in Form eines hervorstehenden Knopfs angeordnet. Dieser Knopf 15 steht nach oben aus dem Gasdruckzylinder 5a heraus und ist auch in dieser herausstehenden Position vorgespannt. Der Knopf 15 funktioniert als eine Art Wechselschalter für eine Ventil und definiert in einem seiner Schaltzustände beispielsweise eine verriegelte Position eines internen Ventils, in welcher die Gasdruckfeder eine relativ große Federkonstante und eine entsprechend große Steifigkeit aufweist. Wird dagegen der Ventilbetätigungsknopf 15 eingedrückt, so wechselt der Schalter in eine andere Position, in der das Ventil geöffnet ist und in diesem Zustand lassen sich Zylinder 5a und Kolben 5b unter relativ geringem Kraftaufwand zusammenschieben, wobei im Inneren der Gasdruckfeder 5 ein einseitig vorgespanntes Fluid über einen Strömungswiderstand zwischen verschiedenen Volumina verschoben wird.

Bei einer anderen Variante der Ventilbetätigung 15 wird durch Eindrücken der Betätigung bzw. des Knopfes 15 das Ventil zwischen den beiden, ein Hydraulikfluid oder dergleichen aufnehmenden Volumina geöffnet, wobei dieser Betätigungsknopf 15 vorgespannt ist und das Ventil wieder schließt, sobald der Druck auf den Knopf nachläßt. Bei dieser Variante muß zum Offenhalten des Ventils über die Teleskopstange ein entsprechender Druck dauerhaft auf die Ventilbetätigung ausgeübt werden, damit das Ventil geöffnet bleibt und die Achsschenkel in eine gewünschte Position, d.h. entweder in die ausgeklappte oder in die eingeklappte Position, bewegbar sind. Sobald die gewünschte Position erreicht ist, kann die Nachführung des Teleskoprohrs beendet werden und das Ende des Teleskoprohrs wird etwas zurückgezogen, um die Ventilbetätigung freizugeben, wodurch das Ventil wieder geschlossen wird.

Wie man beispielsweise in Figur 2 erkennt, wird zum Zusammenlegen des Golfwagens das Lenkerrohr 11 in das zentrale, dritte Rohr des Korpus 1 eingeschoben und trifft mit seinem passend ausgestalteten Ende dabei schließlich auf den hervorstehenden Betätigungsknopf 15 der Gasdruckfeder 5. Hierdurch wird wiederum, wie bereits erwähnt, das Ventil geöffnet und die Federkraft läßt sich nun leicht überwinden, indem eine der Schwingen 3 von Hand angehoben wird, wobei sich der Seilzug 6 spannt und über den am Zylinder 5a angebrachten Seilhalter 16 den Zylinder 5a weiter auf den Kolben 5b zieht. Anschließend kann das Lenkerrohr 1 nachgeführt werden, um beispielsweise das Ventil erneut zu betätigen und in der eingeklappten Position der Achsschenkel 3, 4 in ähnlicher Weise fixieren bzw. "steif" machen wie zuvor in der ausgeklappten Stellung. Wenn einer der beiden Schenkel 3, 4 zum Zusammenklappen des Golfwagens angehoben wird, so wird dadurch der Zylinder 5a weiter auf den Kolben 5b gezogen und gleichzeitig läßt auch die auf den zweiten Seilzug 6 über den Seilhalter 16 ausgeübte Kraft nach. In diesem Fall reicht die Kraft der Druckfeder 25 aus, um über den Bowdenzug 26 auch den anderen Achsschenkel 4 bzw. 3 anzuheben und einzuklappen. Dies erleichtert die Bedienung des Wagens beim Zusammenklappen. Nachdem beide Achsschenkel 3, 4 eingeklappt sind, kann die Lenkstange 11 wieder ein Stück zurückgezogen werden, um die Ventilbetätigung 15 freizugeben, so daß das betreffende Ventil wieder im gesperrten Zustand bleibt und damit die Gasdruckfeder 5 in dieser Stellung im wesentlichen fixiert.

Zum Ausklappen der Achsschenkel bzw. Schwingen 3, 4 wird die Lenkstange 11 mit ihrem unteren freien Ende erneut auf die Ventilbetätigung 15 gedrückt, um das Ventil zu öffnen und die Gasdruckfeder dehnt sich dann wieder aus, wobei die Schwingen 3, 4 über die Seilzüge 6 ausgeklappt werden. Durch erneutes kurzes Betätigen der Ventilbetätigung 15 wird das Ventil wieder verriegelt und die Schwingen werden dann durch die Gasdruckfeder in ihrer ausgeklappten Stellung gehalten. Es versteht sich, daß, abgesehen von dem Vorteil der Ventilbetätigung, anstelle der Gasdruckfeder auch eine stark vorgespannte Schraubenfeder verwendet werden könnte., deren eingeklappte Stellung dann durch andere Mittel verriegelt werden müßte.

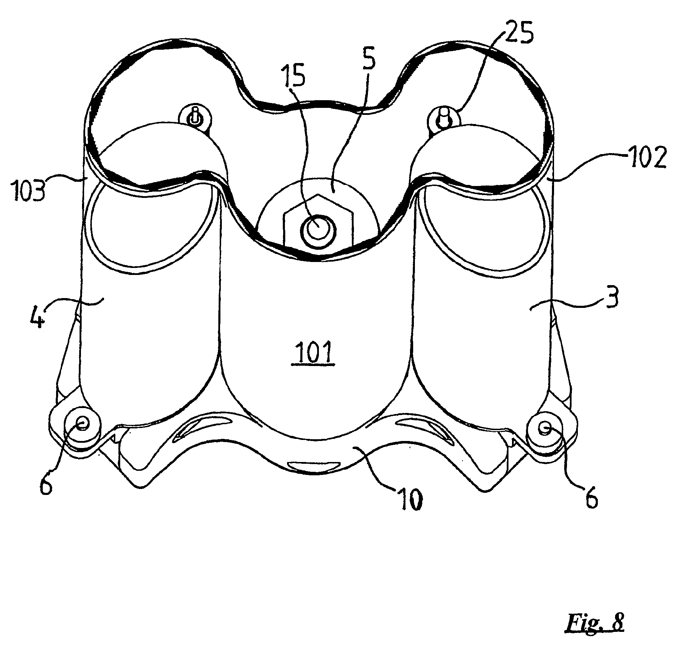

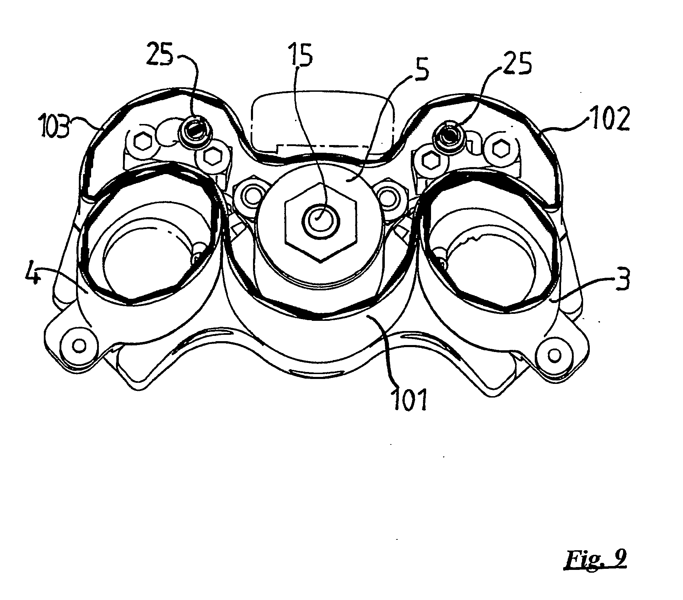

Figur 8 zeigt einen perspektivischen Querschnitt durch den Korpus 1 mit einer Schnittlinie entlang der Linie VIII - VIII in Figur 4. Wie man sieht, sind die Rohre 101, 102 und 103 keine vollständigen Rohre, sondern sind entlang ihrer einander zugewandten Seiten offen und zu einem Korpus 1 miteinander verbunden, der einen gemeinsamen Hohlraum aller drei Rohre 101, 102 und 103 einschließt. Der Querschnitt jedes einzelnen der Rohre 101, 102 und 103 ist im wesentlichen elliptisch, wobei auch das in das mittlere Rohr 101 einzuführende Lenkerrohr 11 einen entsprechenden, im wesentlichen elliptischen Querschnitt hat, dessen große Achse in der in den Figuren 8 und 9 dargestellten Orientierung im wesentlichen horizontal verläuft, während die großen Achsen der Ellipsen, welche die Querschnitte der beiden äußeren Rohre 102 und 103 definieren, mit jener einen Winkel von etwa 45° und miteinander einen Winkel von etwa 90° einschließen.

In der in Figur 8 dargestellten Ansicht erkennt man auch den unteren Bereich der Rohre 102, 103, in welchen die beiden Achsschenkel 3, 4 eingeklappt sind, und man sieht außerdem unten im mittleren Rohr 101 die Gasdruckfeder mit der Ventilbetätigung 15.

Alle drei Rohre sind bzw. der aus den drei zusammenhängenden Rohren bestehende Korpus 1 ist fest auf dem unteren Gelenkteil 10 angebracht, wie es gleich noch genauer beschrieben wird.

In Figur 9 erkennt man einen Schnitt durch den Korpus 1 und die anliegenden Achsschenkel 3, 4 an einer gegenüber Figur 8 etwas tieferen Position. Während das zentrale Rohr 101 hier im wesentlichen die gleiche Querschnittsform hat wie in dem Bild gemäß Figur 8, erkennt man, daß die beiden äußeren Rohre 102, 103 gegenüber der in Figur 8 dargestellten Form stark deformiert sind und im Querschnitt etwa sichelförmig ausgebildet sind. Auf diese Weise werden auf der Außenseite des Korpus auf der konkaven Seite des Sichelquerschnitts Hohlräume gebildet, in welche die beiden Achsschenkel 3, 4 eingeklappt werden können, die ebenfalls aus Rohren bestehen, welche einen im wesentlichen elliptischen Querschnitt haben, wobei dieser Querschnitt im wesentlichen mit dem Querschnitt der Rohre 102, 103 in deren oberen Bereich übereinstimmt und auch die großen Achsen der den Querschnitt definierenden Ellipsen wiederum einen Winkel von etwa 90° miteinander einschließen. Der Übergang von dem elliptischen zu dem sichelförmigen Querschnitt der beiden äußeren Rohre 102, 103 erfolgt in einem in Figur 4 angedeuteten Übergangsbereich 45 im wesentlichen kontinuierlich.

Die Schwenkachsen, die durch die Lage der Achszapfen 30 definiert werden, verlaufen im wesentlichen parallel zu den kleinen Halbachsen der den Querschnitt der Achsschenkel 3, 4 definierenden Ellipsen.

In beiden Figuren 8 und 9 erkennt man im zentralen Rohr 101 die Gasdruckfeder 5 mit der Ventilbetätigung 15 und in Figur 9 erkennt man deutlich die im unteren Bereich der sichelförmigen Rohre angeordneten zusätzlichen Federn 25, die über einen Bowdenzug mit den Achsschenkeln 3, 4 verbunden sind und diese in die dargestellte Position ziehen, sofern von der Gasdruckfeder 5 keine größere Gegenkraft aufgebracht wird.

Die Befestigung des Gelenkteils 10 an dem Korpus 1 erfolgt beispielsweise dadurch, daß ein oberer Abschnitt des Gelenkteils 10 einen Querschnitt hat, der im wesentlichen dem Querschnitt des von den drei Rohren 101, 102 und 103 im unteren Bereich gebildeten Hohlraums entspricht, so daß der Korpus auf diesen oberen Abschnitt des Gelenkteils 10 aufgesteckt werden kann. Die Befestigung kann dann durch quer verlaufende Bolzen oder durch sonstige zusätzliche Befestigungselemente erfolgen, die sich in das Gelenkteil hinein erstrecken und darin fixiert sind und andererseits auch in den Korpus hinein erstrecken und, wiederum z.B. mit quer in den Korpus eingreifenden Bolzen, an diesem fixiert sind.

Im Sinne einer ursprünglichen Offenbarung sollen alle in der vorliegenden Patentanmeldung beschriebenen Merkmale des Kleinfahrzeuges und seiner Aggregate, wie zum Beispiel des Steuergriffes oder der Motoreinheiten, sowohl einzeln und unabhängig voneinander, als auch in beliebigen Kombinationen miteinander als offenbart angesehen werden, soweit eine entsprechende Kombination oder ein Fortlassen von Merkmalen aus der Sicht eines Fachmannes nicht aufgrund technischer Zusammenhänge zwingend ausgeschlossen ist, ohne daß hier in aufwendiger Darlegung eine explizite Auflistung solcher Merkmale und Merkmalskombinationen aufgenommen wurde.

## Patentansprüche

1. Kleinfahrzeug, z.B. Golfwagen, mit einem Korpus (1) und mindestens zwei Rädern (2), die über je einen, gelenkig am Korpus angebrachten Achsschenkel (3, 4) mit jenem verbunden sind, wobei die Achsschenkel (3, 4) in mindestens eine erste Position, in welcher sie an den Korpus (1) herangeklappt sind, und eine zweite Position, in der sich die Achsschenkel (3, 4) von dem Korpus (1) weg erstrecken und die als Fahrposition des Kleinfahrzeugs definiert ist, verschwenkbar sind, **dadurch gekennzeichnet, daß** mindestens eine Feder (5) vorgesehen ist, die einerseits am Korpus (1) und andererseits über den Gelenkbereich an den Achsschenkeln (3, 4) angreift und die Fahrposition der Achsschenkel ohne zusätzliche Querverstrebungen und Verspannungen nur durch ihre Federkraft hält.

2. Kleinfahrzeug nach Anspruch 1, **dadurch gekennzeichnet, daß** die Feder mit einem Ende am Korpus befestigt ist und mit dem anderen Ende am Achsschenkel (3, 4) angreift.

3. Kleinfahrzeug nach Anspruch 1 oder 2, **dadurch gekennzeichnet, daß** die Feder sich mit einem Ende an einem fest mit dem Korpus verbundenen Gelenkteil (10) abstützt

4. Kleinfahrzeug nach einem der Ansprüche 1 bis 3, **dadurch gekennzeichnet, daß** mindestens entweder der Korpus (1) oder einer oder beide Achsschenkel an ihren an die Gelenkverbindung angrenzenden Abschnitten einen hohlen Abschnitt, insbesondere ein Rohr, aufweisen, in welchem die Feder (5) aufgenommen ist.

5. Kleinfahrzeug nach einem der Ansprüche 1 bis 4, **dadurch gekennzeichnet, daß** die Feder eine Gasdruckfeder (5) ist, die mindestens in der Fahrposition der Achsschenkel (3, 4) verriegelbar ist.

6. Kleinfahrzeug nach einem der Ansprüche 1 bis 5, **dadurch gekennzeichnet, daß** die Feder an einem, von dem Rad (2) aus gesehen über die Gelenkverbindung hinausragenden, Abschnitt des Achsschenkels an diesem angreift.

7. Kleinfahrzeug nach einem der Ansprüche 1 bis 6, **dadurch gekennzeichnet, daß** im Gelenkbereich zwischen Korpus und Achsschenkeln ein mechanischer Anschlag vorgesehen ist, welcher zusätzlich zu der Feder eine maximal ausgeklappte Fahrposition begrenzt.

8. Kleinfahrzeug nach einem der Ansprüche 1 bis 7, **dadurch gekennzeichnet, daß** die Gasdruckfeder zentral im unteren Bereich des Korpus angeordnet und mit einem Ende am Korpus oder einem mit dem Korpus starr verbundenen Gelenkteil (10) befestigt ist, wobei ein Ende der Gasdruckfeder (5) über je einen Seilzug (6) mit zugehörigen Achsschenkeln (3, 4) verbunden ist, wobei der Seilzug (6) im Abstand zu der Gelenkachse über einen jenseits der Gelenkachse angeordneten Umlenkblock bzw. je eine am Gelenkende des Achsschenkels (3, 4) angebrachte Seilscheibe (6) geführt und an dem Achsschenkel (3, 4) befestigt ist.

9. Kleinfahrzeug nach einem der Ansprüche 1 bis 8, **dadurch gekennzeichnet, daß** der Korpus aus mindestens zwei im wesentlichen parallelen und starr miteinander verbundenen Rohrteilen besteht, die in ihrem unteren Bereich über ein gemeinsames Gelenkteil (10) mit je einem der vorzugsweise rohrförmigen Achsschenkel (3, 4) verbunden sind.

10. Kleinfahrzeug nach Anspruch 9, **dadurch gekennzeichnet, daß** zwischen den beiden äußeren Rohren (102, 103) des Korpus (1) ein drittes Rohr angeordnet ist, das als Führungsrohr für eine darin teleskopartig aufgenommene Lenkstange (11) dient.

11. Kleinfahrzeug nach Anspruch 9 oder 10, **dadurch gekennzeichnet, daß** die beiden äußeren Rohre in ihrem unteren Bereich je eine Aussparung zur Aufnahme der eingeklappten Achsschenkel (3, 4) aufweist

12. Kleinfahrzeug nach einem der Ansprüche 9 bis 11, **dadurch gekennzeichnet, daß** die Gasdruckfeder im unteren Bereich des dritten Rohrs angeordnet ist und ein Ventil aufweist, welches durch Einschieben der Lenkstange (11) in das dritte Rohr betätigbar ist.

13. Kleinfahrzeug nach einem der Ansprüche 1 bis 12, **dadurch gekennzeichnet, daß** jeder der Achsschenkel (3, 4) durch jeweils eine Zusatzfeder (25) in Richtung der eingeklappten Position vorgespannt ist.

14. Kleinfahrzeug nach Anspruch 13, **dadurch gekennzeichnet, daß** die Zusatzfeder über einen Bowdenzug (26) und eine Umlenkrolle auf den Gelenkabschnitt des Achsschenkels (3, 4) wirkt.

15. Kleinfahrzeug nach einem der Ansprüche 1 bis 13, **dadurch gekennzeichnet, daß** an der Lenkstange ein abnehmbarer, asymmetrischer und in mindestens zwei um 180° verdrehten Positionen montierbarer Handgriff vorgesehen ist.

16. Kleinfahrzeug nach Anspruch 14 oder 15, **dadurch gekennzeichnet, daß** der Handgriff digitale Steuerungselemente und eine Sendespule aufweist, mit welcher digitale Signale auf eine benachbarte Empfangsspule, welche an der Lenkerstange angeordnet ist, übertragbar sind.

17. Kleinfahrzeug nach einem der Ansprüche 1 bis 16, **dadurch gekennzeichnet, daß** die Räder über eine Schnellkupplung abnehmbar an den Achsschenkeln angebracht sind.

18. Kleinfahrzeug nach einem der Ansprüche 1 bis 17, **dadurch gekennzeichnet, daß** jedes der Räder einen eigenen Antriebsmotor mit einer individuellen Stromversorgung und einer individuellen Steuerelektronik aufweist.

19. Kleinfahrzeug nach Anspruch 18, **dadurch gekennzeichnet, daß** die Motoren Servomotoren sind und einen Encoder zur Bestimmung und Einstellung ihrer Rotationsgeschwindigkeit aufweisen.

## Claims

1. Small vehicle, e.g. caddie cart, with a body (1) and at least two wheels (2) each connected to the body via a stub axle (3, 4) attached to the body to same in articulated manner, wherein the stub axles (3, 4) are pivotable in at least a first position in which they are folded up against the body (1) and a second position in which the stub axles (3, 4) extend out from the body and which is defined as the travelling position of the small vehicle, **characterized in that** at least one spring (5) is provided which engages on one side at the body (1) and on the other at the stub axles (3, 4) via the hinged area and by its spring force alone holds the travelling position of the stub axles without additional radial reinforcements and stays.

2. Small vehicle according to claim 1, **characterized in that** the spring is secured to the body at one end and engages at the stub axle (3, 4) with the other end.

3. Small vehicle according to claim 1 or 2, **characterized in that** the spring rests with one end against a hinge part (10) firmly connected to the body.

4. Small vehicle according to one of claims 1 to 3, **characterized in that** at least either the body (1) or one or both stub axles have at their sections adjoining the hinge joint a hollow section, in particular a pipe, in which the spring (5) is housed.

5. Small vehicle according to one of claims 1 to 4, **characterized in that** the spring is a gas-pressure spring (5) which can be locked at least in the travelling position of the stub axles (3, 4).

6. Small vehicle according to one of claims 1 to 5, **characterized in that** the spring engages, at a section of the stub axle, projecting beyond the hinge joint as seen from the wheel (2), of the stub axle, with same.

7. Small vehicle according to one of claims 1 to 6, **characterized in that** there is provided in the hinged area between body and stub axles a mechanical stop which, in addition to the spring, limits a travelling position unfolded to the maximum of the stub axles.

8. Small vehicle according to one of claims 1 to 7, **characterized in that** the gas-pressure spring is arranged centrally in the lower area of the body and secured by one end to the body or to a hinge part (10) rigidly connected to the body, wherein one end each of the gas-pressure spring (5) is connected via a cable pull (6), to the associated stub axles (3, 4), wherein the cable pull (6) is guided at a distance from the hinge axle over a guide block arranged beyond the hinge axle or a pulley (6) each attached to the hinge end of the stub axle (3, 4) and secured to the stub axle (3, 4).

9. Small vehicle according to one of claims 1 to 8, **characterized in that** the body consists of two substantially parallel tube parts rigidly connected to each other, each of which is connected in their lower area via a hinge part (10) to one of the preferably tubular stub axles (3, 4).

10. Small vehicle according to claim 9, **characterized in that** there is arranged between the two outer pipes (102, 103) of the body (1) a third pipe which serves as a guide pipe for a steering rod (11) housed therein in the manner of a telescope.

11. Small vehicle according to claim 9 or 10, **characterized in that** each of the two outer pipes has in its lower area a recess to house the folded-in stub axles (3, 4).

12. Small vehicle according to one of claims 9 to 11, **characterized in that** the gas-pressure spring is arranged in the lower area of the third pipe and has a valve which can be actuated by pushing the steering rod (11) into the third pipe.

13. Small vehicle according to one of claims 1 to 12, **characterized in that** each of the stub axles (3, 4) is pretensioned by an additional spring (25) in the direction of the folded-in position.

14. Small vehicle according to claim 13, **characterized in that** the additional spring acts on the hinge section of the stub axles (3, 4) via a Bowden wire (26) and a guide roll.

15. Small vehicle according to one of claims 1 to 13, **characterized in that** there is provided at the steering rod a removable, asymmetrical handle that can also be mounted in at least two positions rotated by 180 °.

16. Small vehicle according to claim 14 or 15, **characterized in that** the handle has digital control elements and a transmitting coil with which digital signals can be transmitted to a neighbouring receiver coil which is arranged on the steering rod.

17. Small vehicle according to one of claims 1 to 16, **characterized in that** the wheels are attached to the stub axles removable via a quick-release coupling.

18. Small vehicle according to one of claims 1 to 17, **characterized in that** each of the wheels has its own drive motor with an individual power supply and individual control electronics.

19. Small vehicle according to claim 18, **characterized in that** the motors are servomotors and have an encoder for determining and setting their rotation speed.

## Revendications

1. Voiturette, par exemple chariot de golf, comportant un corps (1) et au moins deux roues (2) qui sont reliées chacune au corps par l'intermédiaire d'une branche à essieu (3, 4) montée de façon articulée sur le corps, les branches à essieu (3, 4) étant aptes à pivoter dans au moins une première position dans laquelle elles sont rabattues contre le corps (1), et dans une deuxième position dans laquelle les branches à essieu (3, 4) sont écartées du corps (1) et qui est définie comme position de roulement de la voiturette, **caractérisée en ce qu'**il est prévu au moins un ressort (5) qui s'engage d'une part avec le corps (1) et d'autre part avec les branches à essieu (3, 4) par l'intermédiaire de la région articulée et qui maintient la position de roulement des branches à essieu sans traverses ni haubanages supplémentaires par sa seule force élastique.

2. Voiturette selon la revendication 1, **caractérisée en ce que** le ressort est fixé par une extrémité au corps et coopère par l'autre extrémité avec la branche à essieu (3, 4).

3. Voiturette selon la revendication 1 ou 2, **caractérisée en ce que** le ressort s'appuie par une extrémité contre une pièce articulée (10) fixée au corps.

4. Voiturette selon l'une des revendications 1 à 3, **caractérisée en ce qu'**au moins le corps (1) ou une branche à essieu, ou les deux branches à essieu, comportent au niveau de leurs portions bordant la liaison articulée, une portion creuse, notamment un tube, dans laquelle est reçu le ressort (5).

5. Voiturette selon l'une des revendications 1 à 4, **caractérisée en ce que** le ressort est un ressort pneumatique (5) qui peut être verrouillé au moins dans la position de roulement des branches à essieu (3, 4).

6. Voiturette selon l'une des revendications 1 à 5, **caractérisée en ce que** le ressort coopère avec la branche à essieu au niveau d'une portion de celle-ci qui fait saillie au-dessus de la liaison articulée lorsque l'on regarde depuis la roue (2).

7. Voiturette selon l'une des revendications 1 à 6, **caractérisée en ce qu'**il est prévu dans la région articulée entre le corps et les branches à essieu une butée mécanique qui limite, en plus du ressort, une position de roulement déployée maximale.

8. Voiturette selon l'une des revendications 1 à 7, **caractérisée en ce que** le ressort pneumatique est placé au centre dans la région inférieure du corps et est fixé par une extrémité au corps ou à une pièce articulée (10) reliée rigidement au corps, une extrémité du ressort pneumatique (5) étant reliée par un câble gainé (6) à chacune des branches à essieu associées (3, 4), le câble gainé (6) étant guidé à distance de l'essieu articulé par un bloc de déviation placé de l'autre côté de l'essieu articulé respectivement par une poulie (6) montée à l'extrémité articulée de la branche à essieu (3, 4) et étant fixé à la branche à essieu (3, 4).

9. Voiturette selon l'une des revendications 1 à 8, **caractérisée en ce que** le corps est constitué d'au moins deux pièces tubulaires qui sont sensiblement parallèles et reliées rigidement l'une à l'autre et qui sont reliées dans leur région inférieure, par une pièce articulée commune (10), à l'une des branches à essieu (3, 4) avantageusement tubulaires.

10. Voiturette selon la revendication 9, **caractérisée en ce qu'**un troisième tube, qui sert de tube de guidage d'une barre de direction (11) reçue de façon télescopique à l'intérieur, est placé entre les deux tubes extérieurs (102, 103) du corps (1).

11. Voiturette selon la revendication 9 ou 10, **caractérisée en ce que** les deux tubes extérieurs comportent chacun dans leur région inférieure un évidement destiné à recevoir les branches à essieu (3, 4) qui ont été rabattues.

12. Voiturette selon l'une des revendications 9 à 11, **caractérisée en ce que** le ressort pneumatique est placé dans la région inférieure du troisième tube et comporte un clapet qui peut être actionné en insérant la barre de direction (11) dans le troisième tube.

13. Voiturette selon l'une des revendications 1 à 12, **caractérisée en ce que** chacune des branches à essieu (3, 4) est précontrainte en direction de la position rabattue par un ressort supplémentaire (25).

14. Voiturette selon la revendication 13, **caractérisée en ce que** le ressort supplémentaire agit sur la portion articulée de la branche à essieu (3, 4) par l'intermédiaire d'un câble Bowden (26) et d'une poulie de renvoi.

15. Voiturette selon l'une des revendications 1 à 13, **caractérisée en ce qu'**il est prévu sur la barre de direction une poignée amovible et asymétrique qui peut être montée dans au moins deux positions décalées de 180°.

16. Voiturette selon la revendication 14 ou 15, **caractérisée en ce que** la poignée comporte des éléments de commande numérique et une bobine d'émission permettant de transmettre des signaux numériques à une bobine de réception voisine qui est placée sur la barre de direction.

17. Voiturette selon l'une des revendications 1 à 16, **caractérisée en ce que** les roues sont montées de façon amovible sur les branches à essieu au moyen d'un raccord rapide.

18. Voiturette selon l'une des revendications 1 à 17, **caractérisée en ce que** chacune des roues comporte un moteur d'entraînement propre doté d'une alimentation en courant individuelle et d'une électronique de commande individuelle.

19. Voiturette selon la revendication 18, **caractérisée en ce que** les moteurs sont des servomoteurs et comportent un codeur permettant de définir et de régler leur vitesse de rotation.
